**Europäisches Patentamt**

**European Patent Office**

**Office européen des brevets**

(19)

(11) Numéro de publication : **0 495 707 A1**

(12) # DEMANDE DE BREVET EUROPEEN

(21) Numéro de dépôt : **92400093.8**

(22) Date de dépôt : **14.01.92**

(51) Int. Cl.⁵ : **C02F 1/72, C02F 1/78**

(30) Priorité : **16.01.91 FR 9100412**

(43) Date de publication de la demande :
**22.07.92 Bulletin 92/30**

(84) Etats contractants désignés :
**CH DE DK ES GB IT LI NL SE**

(71) Demandeur : **OTV (OMNIUM de TRAITEMENTS et de VALORISATION)
Le Doublon 11 avenue Dubonnet
F-92407 Courbevoie (FR)**

(72) Inventeur : **Paillard, Hervé
Cabinet Bollet-Schmit, 7 rue Le Sueur
F-75116 Paris (FR)**

(74) Mandataire : **Cuer, André et al
Cabinet Ballot-Schmit 7, rue Le Sueur
F-75116 Paris (FR)**

(54) **Procédé et dispositif d'oxydation des micropolluants organiques dans les eaux par le couple O3/H2O2.**

(57)    L'invention concerne un procédé et dispositif d'oxydation combinée d'une eau polluée, selon lesquels le peroxyde d'hydrogène (solution aqueuse pure ou diluée) et l'ozone (gazeux, ou air ou oxygène ozoné) sont injectés simultanément et à co-courant de la circulation d'eau à traiter, à l'entrée du réacteur d'oxydation.

Par exemple, le réacteur (1) est muni de moyens pour injecter à sa base, en des points très proches et simultanément, de l'ozone (2) et du peroxyde d'hydrogène (8) en co-courant avec l'eau à traiter (5), avec système d'asservissement (10) pour la régulation des taux d'oxydants.

Application au traitement des eaux à potabiliser ainsi que des eaux résiduaires et industrielles à épurer.

FIG.1

EP 0 495 707 A1

La présente invention a trait au domaine de l'épuration des eaux et, tout spécialement, au traitement de matières organiques polluantes par une oxydation poussée dans laquelle on met en oeuvre la combinaison d'ozone (O3) et de peroxyde d'hydrogène (H2 O2). Elle s'applique aussi bien aux eaux à potabiliser qu'aux eaux résiduaires et aux eaux industrielles à épurer.

L'ozone est utilisé depuis longtemps pour la désinfection des eaux et pour oxyder les matières organiques résiduelles ainsi que les éléments minéraux réducteurs contenus dans une eau à épurer. On connait également l'action des peroxydes, en particulier H2O2, pour éliminer les composés odorants, pour oxyder les phénols résiduels de l'eau ou encore pour éliminer les produits toxiques tels que cyanures, chrome,etc..

Du fait que certains composés organiques ou minéraux sont difficilement oxydables par O3 seul ou H2O2 seul, de nombreux auteurs ont proposé, depuis déjà une dizaine d'année, de coupler l'action de O3 à celle de H2 O2 pour augmenter très sensiblement le pouvoir d'oxydation de chacun des deux oxydants pris séparément. Il a en effet été constaté et démontré que les radicaux hydroxyles OH très réactifs, formés lors de la combinaison des deux oxydants, donnaient lieu à des réactions en chaine permettant une dégradation très poussée des micropolluants organiques.

Dans les diverses techniques décrites jusqu'ici pour cette oxydation combinée, on a préconisé l'utilisation de réacteurs fonctionnant soit de manière statique et en discontinu (Glaze & al, Proceedings of the second Intern. conference, Edmonton, Alberta 28.29 Avril 87 p,233,243 ; Namba & Nakayama. Bull.chem.Soc. Japon 55 p.3339-3340) soit de manière dynamique, c'est-à-dire avec circulation d'eau à traiter en continu, mais selon un processus où l'eau circule à contre-courant de l'envoi des produits oxydants (Nakayama & al : ozone,Science and Engineering vol 1 pp.119.131.1979 : D.W. Ferguson & al, Research and Technology, journal AWWA, Avril 1990 p.181-191). Plus récemment, on a proposé d'introduire dans un réacteur d'ozonation, où circule l'eau à traiter, des injections étagées dans le temps et dans l'espace (c'est-à-dire à des niveaux différents du réacteur ) de peroxyde d'hydrogène (Certificat d'Addition N°88.17134 publ.2640957 au brevet français n°83.07764).

De très nombreuses expérimentations effectuées chez la Demanderesse ont permis d'établir que, si l'utilisation combinée de O3 et H2 O2 dans le traitement d'une eau à épurer permettait de diminuer notablement le taux des polluants oragniques toxiques par rapport à l'usage de O3 seul, les différents paramètres de mise en oeuvre de ces agents oxydants revêtaient une importance primordiale dans la recherche de résultats optimum.

Le but de la recherche étant la mise au point d'un procédé industriel de traitement en dynamique pour l'oxydation continue d'une eau à débarrasser quasi totalement de ses micropolluants organiques, il a été trouvé de façon surprenante, et contrairement aux enseignants souvent contradictoires apportés jusqu'ici, que non seulement l'injection de O3 et H2O2 devait être simultanée mais que les deux oxydants devaient être introduits en des points extrêmement proches du réacteur d'oxydation et dans une eau à traiter circulant à co-courant de celui des bulles de gaz ozoné (oxygène ou air ozoné).

Ainsi, selon sa définition la plus générale, le procédé selon l'invention consiste à effectuer l'oxydation combinée de l'eau à épurer par injection simultanée et à co-courant de la circulation d'eau d'une solution aqueuse deH2O2 et de gaz ozoné juste à l'entrée (ou en amont) du réacteur d'oxydation.

L'ensemble des conditions critiques pour les principaux paramètres opératoires permettant d'obtenir des résultats optimum dans l'épuration constitue une sélection dont les éléments sont résumés ci-après.

Tout d'abord il a été déterminé que le rapport massique calculé en $H_2O_2/O_3$, devait être compris entre 0,20 et 1 et, de façon plus avantageuse, entre 0,20 et 0,45. En pratique, la quantité de solution aqueuse de $H_2O_2$ injectée (pure ou diluée) est déterminée par rapport au taux d'ozonation appliqué et au résiduel d'ozone désirè dans l'eau oxydée. Lorsqu'un résiduel de $O_3$ nul (ou en tout cas moins de 0,05 mg de O3/l) est souhaité,il faut injecter une dose de peroxyde d'hydrogène telle que le rapport massique $H_2O_2/O_3$ soit supérieur à 0,30 et de préférence à 0,35. Toutefois, un excès de $H_2O_2$ n'est pas souhaitable car des réactions parasites, consommatrices des espèces radicalaires oxydantes, pourraient être favorisées, ce qui entraînerait une diminution de l'efficacité du couple d'oxydation. En outre, le résiduel de $H_2O_2$ après le réacteur d'oxydation doit être le plus faible possible. Un tel excès de peroxyde d'hydrogène surviendra lorsque le rapport massique $H_2O_2$ injecté/$O_3$ injecté est supérieur à 0,45g/g. Lorsqu'un résiduel d'ozone de x mg O3/1 est souhaité en sortie du réacteur d'oxydation, l'ozone sera injecté en excès par rapport à H2O2 mais en respectant le rapport massique suivant : H2O2 injecté/O3 injecté - x) = 0,30 g/g.

Conformément à une disposition avantageuse de l'invention, l'injection du peroxyde d'hydrogène est régulée automatiquement par asservissement du système d'injection à la mesure en continu du taux résiduel d'ozone dans l'eau à la sortie du réacteur. Un tel système de régulation permet de maintenir un taux résiduel de peroxyde d'hydrogène inférieur ou égal à 0,25 mg/l en sortie du réacteur d'oxydation, pour une présence de résiduel d'ozone dans l'eau supérieur à 0,05 mg O3/l, ceci pour un temps de contact minimum d'une minute dans le réacteur d'oxydation.

En pratique, l'injection simultanée des deux oxydants est faite en continu. Toutefois, il a été trouvé que l'on pouvait améliorer assez sensiblement, au moins dans certains cas, les rendements d'élimination en polluants organiques, en effectuant cette injection simultanée par des pulsations périodiques, de périodicité avantageusement comprise entre T/60 et T/4, T étant le temps de contact, en minutes, dans le réacteur d'oxydation.

Conformément à une autre disposition de l'invention, le pH de l'eau à traiter est, si besoin est, corrigé pour être amené à une valeur comprise entre 7 et 8, de préférence voisine de 7,5, pour laquelle l'oxydation combinée par H2 O2 et O3 est optimale. Suivant le type d'eau à traiter, le pH peut être soit remonté avec du CO2 ou de l'acide, soit abaissé à l'aide de soude, chaux, carbonate ou bicarbonate de sodium.

Les exemples qui suivent ont pour but d'une part d'illustrer la recherche de configuration idéale du réacteur d'oxydation et de montrer la nécessité d'injecter le couple oxydant H2O2/O3 à co-courant de l'eau à traiter et en des points les plus proches possibles (exemple 1) et, d'autre part, de mettre en exergue l'importance, selon l'autre caractéristique essentielle de l'invention, d'une injection simultanée à l'aide des deux oxydants (exemple 2)

## Exemple 1

Une eau de la Seine préalablement filtrée et contenant 1,99 µg/l d'atrazine et 0,525 µg/l de simazine a été traitée par oxydation combinée O3/H2O2 en vue de diminuer la teneur en ces micropolluants organiques.

Les traitements ont été effectués dans un réacteur constitué par une colonne de hauteur de 4 mètres et de volume 114 litres, alimenté par un débit d'eau à traiter, en continu, de 685 l/h. Un diffuseur d'ozone était installé à la base de la colonne et, à titre de comparaison, on a effectué des séries d'expériences selon 4 modes distincts de traitements en faisant varier les sens de circulation d'eau et les types d'injection de peroxyde d'hydrogène, à savoir :

Mode 1 a : l'eau brute circulait de haut en bas dans la colonne et l'injection de H2 O2 a été faite à l'arrivée d'eau brute en haut de colonne)

mode 1b : l'eau brute circulait également de haut en bas mais l'injection de H2 O2 était faite sensiblement en milieu de colonne

Mode 1 c : l'eau brute était envoyée de bas en haut, donc à co-courant avec les bulles ascendantes du diffuseur d'ozone et on injectait H2O2 juste à l'arrivée de l'eau brute dans la colonne

mode 1 d : même système que dans le mode 1c mais avec une injection de H2 O2 juste au-dessus de la plaque poreuse du diffuseur d'ozone.

Dans les 4 cas susvisés on a adopté des conditions identiques suivantes : taux d'ozonation de 2,9 mg de O3/l ; rapport massique H2O2 injecté/O3 injecté de 0,40 g/g ; air ozoné : 14 g de O3/M3 d'air ; temps de contact de dix minutes dans le réacteur ; température de 23°C.

A titre de variante on a également étudié l'injection, toujours simultanée, mais par impulsions de durée 30 secondes, des deux oxydants O3 et H2O2 au lieu de l'injection continue. Les résultats sont consignés dans le tableau 1 ci-dessous :

### Tableau 1

| Mode opératoire | O3 + H2O Injection continue Rendement d'élimination % | | O3 + H2O2 Injection par impulsions Rendement d'élimination % | |
|---|---|---|---|---|
| | Atrazine | Simazine | Atrazine | Simazine |
| 1 a | 71,6 | 79 | 72,4 | 80 |
| 1 b | 62,8 | 67,6 | 69,1 | 73,3 |
| 1 c | 74,1 | 81 | 75,4 | 82,9 |
| 1 d | 80,3 | 87,9 | 81,2 | 89,6 |

Ces résultats montrent d'une part que les modes 1c et 1d conduisent aux meilleurs rendements d'abattement sur les deux polluants en cause et que l'on a intérêt à injecter H2O2 le plus près possible du système de diffusion de O3 gazeux, ceci avec une circulation à co-courant de l'eau à traiter, et que, d'autre part, l'injection de H2O2 par impulsion améliore légèrement les rendements d'abattements en polluants.

Exemple 2

Une eau souterraine peu chargée en carbone organique total (0,5 mg de C/l) contenant 4,73 µg/l d'atrazine a été oxydée par la combinaison O3/H2O2 dans les conditions suivantes : dose d'ozone : 3 mg/l ; H2O2 injecté/O3 injecté : 0,40 g/g ; pH : 7,8 ; température 20°C, temps de contact de 10 minutes pour l'ozone. Le peroxydé d'hydrogène a été introduit, à titre comparatif, soit simultanément à l'ozone, soit 4 minutes après l'injection d'ozone, toutes autres conditions opératoires étant évidemment égales par ailleurs. Les résultats obtenus sont consignés dans le tableau 2 ci-après :

### Tableau 2

| Résumé des résultats | Injection simultanée | Injection H2O₂ 4mn après O3 |
|---|---|---|
| Concentration moyenne en Atrazine après 10 essais (µg/l) | 0,152 | 0,412 |
| *Ecart type σ | 0,071 | 0,124 |
| Rendement moyen d'oxydation(%) | 96,8 + 1,5 | 91,3 + 2,7 |
| Résiduel moyen en H2O2 (mg/l) | 0,15 | 0,37 |
| Résiduel moyen en O3 (mg/l) | 0,03 | 0,05 |

\* Ecart maximum par rapport à la moyenne des résultats (sur 10 essais)

Les expérimentations résumées ci-dessus montrent bien qu'il est nécessaire d'opérer une injection simultanée des deux oxydants pour obtenir de très bons rendements d'élimination des polluants organiques. Par ailleurs, la différence entre les deux modes d'injection est tout à fait significative d'un point de vue statistique, lorsqu'on tient compte des écarts-types entre les expérimentations.

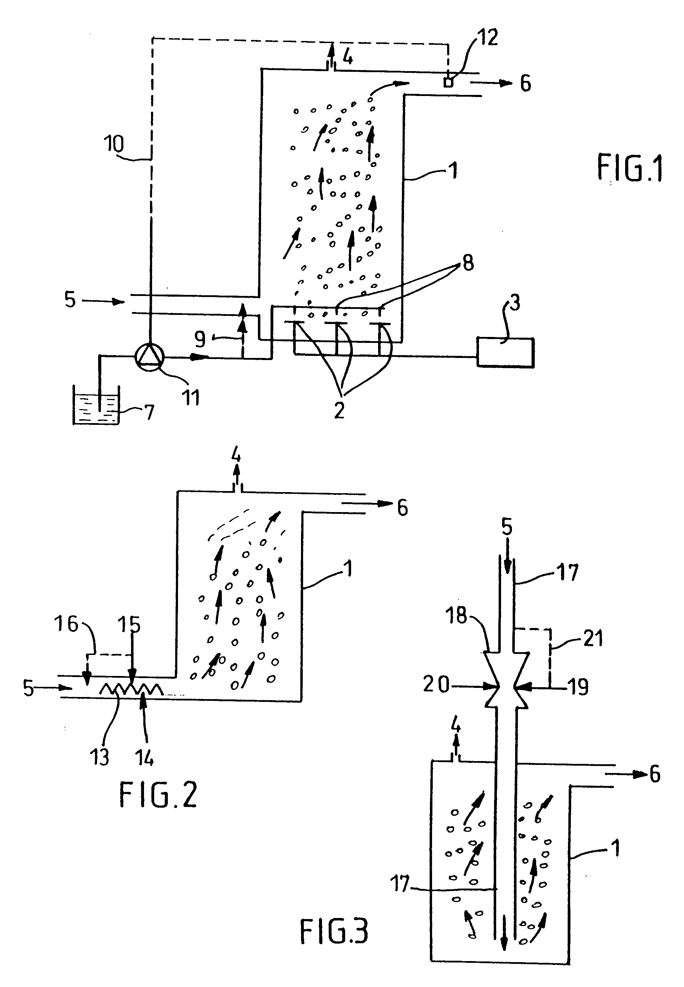

Le procédé selon l'invention peut être mis en oeuvre dans tout type d'installation de traitement d'eau comportant, à un stade adéquat, une phase d'oxydation des matières organiques. A titre illustratif, on a représenté sur les dessins annexés, sous forme schématique, trois types de réalisation correspondant aux figures 1 à 3.

Conformément au mode de la figure 1, le réacteur d'oxydation 1, muni à sa base de plaques poreuses 2 diffusant l'ozone gazeux généré par un ozoneur 3 et pourvu d'un évent 4 est alimenté en eau brute de bas en haut par la canalisation 5, l'eau traitée étant évacuée du réacteur par le haut à la sortie 6. Le peroxyde d'hydrogène, dilué ou non; stocké dans le récipient 7, est injecté par des cannes appropriées 8 juste au-dessus des plaques 2 de diffusion d'ozone. Selon une variante de réalisation schématisée par le conduit fléché en pointillé 9, H2O2 peut être introduit dans la canalisation 5 d'amenée d'eau juste à l'entrée du réacteur, en un point proche des diffuseurs 2 d'ozone. Un système d'asservissement 10, permettant de réguler les taux d'H2O2 et le résiduel d'ozone dans l'eau traitée, est installé entre la vanne 11 de délivrance de H2O2 et un détecteur 12 pour la mesure du taux d'ozone, à la sortie haute du réacteur 1.

Selon la réalisation illustrée brièvement sur la figure 2, où l'oxydation est également faite à co-courant de la circulation de l'eau à traiter, qui entre dans le réacteur 1 par la base 5 et ressort par le haut 6, l'introduction du couple d'oxydants est faite dans un mélangeur statique 13. La flèche 14 correspond à l'injection de O3 alors que la flèche 15 simule l'injection de H₂O₂. . Selon la variante indiquée par la ligne pointillée 16, H₂O₂ peut être introduit légèrement en amont du mélangeur 13.

Enfin selon la variante représentée sur la figure 3, l'eau à traiter est introduite dans le réacteur 1 au moyen d'une canalisation 17 sur le circuit de laquelle est installé un mélangeur type Venturi 18. Le peroxyde d'hydrogène et l'ozone sont introduits, par exemple respectivement en 19 et 20, dans le col de Venturi. Conformément à la variante illustrée par une ligne pointillée 21, H2O2 peut être mélangé à l'eau à traiter juste en amont du système Venturi 18.

On notera que, dans tous les cas et conformément aux paramètres critiques du procédé de l'invention, les deux oxydants sont injectés en co-courant avec l'eau à traiter, en des points très proches l'un de l'autre, à l'entrée du réacteur et que, en outre, l'injection est simultanée,soit en continu soit par pulsations.

## Revendications

1. Procédé d'oxydation combinée d'une eau polluée par mise en oeuvre d'ozone, sous forme gazeuse pure ou d'air ou oxygène ozoné, et de solution aqueuse de peroxyde d'hydrogène, pure ou diluée, caractérisé en ce que le peroxyde d'hydrogène et l'ozone sont injectés simultanément et à co-courant de la circulation d'eau à traiter, à l'entrée du réacteur d'oxydation.

2. Procédé selon la revendication 1, caractérisé en ce que le rapport massique calculé en $H_2O_2$ injecté/$O_3$ injecté et compris entre 0,20 et 1.

3. Procédé selon la revendication 1, caractérisé en ce que le rapport massique calculé en $H_2O_2$ injecté/$O_3$ injecté est maintenu entre 0,20 et 0,45.

4. Procédé selon l'une quelconque des revendications 1 ou 2, caractérisé en ce que l'injection simultanée des deux oxydants est faite en continu.

5. Procédé selon l'une quelconque des revendications 1 ou 2, caractérisé en ce que l'injection de l'ozone est faite en continu alors que celle du peroxyde d'hydrogène est faite par pulsations de périodicité comprise entre T/60 et T/4, T étant le temps de contact en minutes dans le réacteur d'oxydation.

6. Procédé selon l'une quelconque des revendications 1 à 4, caractérisé en ce que le pH de l'eau à traiter est ajusté, avant le traitement de l'oxydation, à une valeur comprise entre 7 et 8.

7. Réacteur d'ozonation pour la mise en oeuvre du procédé selon l'une quelconque des revendications 1 à 5, caractérisé en ce qu'il est muni de moyens pour injecter à sa base, en des points très proches et simultanément, de l'ozone (2) et du peroxyde d'hydrogène (8) en cocourant avec l'eau à traiter qui entre par le bas(5) du réacteur (1) et sort par le haut (6) de ce dernier.

8. Réacteur selon la revendication 5, caractérisé en ce que le peroxyde d'hydrogène est injecté, simultanément à l'ozone ou par pulsations, par une canalisation (9) directement dans l'eau à traiter et en amont du système d'ozonation (2).

9. Réacteur selon l'une quelconque des revendications 6 et 7, caractérisé en ce qu'il est muni d'un système d'asservissement (10) permettant de réguler le taux de $H_2O_2$ et le résiduel d'ozone dans l'eau traitée et installé entre un dispositif (11) de distribution de $H_2O_2$ et un détecteur d'ozone (12) installé dans la canalisation de sortie (6) de l'eau traitée.

10. Réacteur d'ozonation pour la mise en oeuvre du procédé selon l'une quelconque des revendications 1 à 5, caractérisé en ce qu'il est muni, dans la canalisation d'entrée (5) de l'eau à traiter, à la base du réacteur (1), d'un mélangeur statique (13) pour l'injection simultanée de O3 (14) et de $H_2O_2$ (15), l'introduction d'$H_2O_2$ pouvant être faite, en variante (16), en amont du mélangeur (13) directement dans l'eau à traiter (5)

11. Réacteur d'ozonation pour la mise en oeuvre du procédé selon l'une quelconque des revendications 1 à 5, caractérisé en ce qu'il comporte une canalisation (17) d'introduction de l'eau à traiter (5) et sur laquelle est installé un dispositif de type Venturi (18) dans le quel sont injectés simultanément le peroxyde d'hydrogène (19) et l'ozone (20), le peroxyde pouvant aussi être introduit dans l'eau à traiter un peu en amont (21) du dispositif Venturi (18).

FIG.1

FIG.2

FIG.3

Office européen
des brevets

**RAPPORT DE RECHERCHE EUROPEENNE**

Numero de la demande

EP 92 40 0093

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PATENT ABSTRACTS OF JAPAN, vol. 5, no. 160 (C-075)[832], 15 octobre 1981; & JP-A-56 089 892 (MITSUBISHI JUKOGYO) 21-07-1981 | 1 | C 02 F 1/72 C 02 F 1/78 |
| Y | IDEM | 2,3 | |
| Y,D | RESEARCH AND TECHNOLOGY/JOURNAL AWWA, avril 1990, pages 181-190, US; D.W. FERGUSON et al.: "Comparing peroxone and ozone for controlling taste and odor compounds, disinfection by-products, and microorganisms" * Page 183, colonne de gauche, lignes 6-19 * | 2,3 | |
| X,P | FR-A-2 662 435 (GUASCO)(29-11-1991) * Page 2, lignes 4-37; revendications 2,3 * | 1-3 | |
| A,D | FR-A-2 640 957 (LYONNAISE DES EAUX) * Page 3, lignes 10-33 * | 1 | **DOMAINES TECHNIQUES RECHERCHES (Int. Cl.5)** |
| | | | C 02 F |

Le présent rapport a été établi pour toutes les revendications

| Lieu de la recherche | Date d'achèvement de la recherche | Examinateur |
|---|---|---|
| LA HAYE | 22-04-1992 | KASPERS H.M.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)